# EUROPÄISCHE PATENTSCHRIFT

(11) **EP 3 899 471 B1**
(45) Veröffentlichungstag und Bekanntmachung des Hinweises auf die Patenterteilung: **18.10.2023**
(21) Anmeldenummer: 19806231.7
(22) Anmeldetag: 21.11.2019
(51) Int. Cl.: G01L 9/00, G01L 9/14, G01L 19/00, G01L 27/00, G01L 19/06, G01L 19/04

(54) **DRUCKMESSAUFNEHMER MIT EINRICHTUNG ZUR AUSLENKUNG EINER TRENNMEMBRAN**
PRESSURE SENSOR WITH MEANS FOR DISPLACING AN ISOLATION DIAPHRAGM
CAPTEUR DE PRESSION AVEC MOYEN POUR DEPLACER UNE MEMBRANE ISOLANTE

(30) Priorität: 20.12.2018 DE 102018133056
(43) Veröffentlichungstag der Anmeldung: 27.10.2021
(73) Patentinhaber: Endress+Hauser SE+Co. KG, 79689 Maulburg (DE)
(72) Erfinder: LOPATIN, Sergey, 79540 Lörrach (DE); GETMAN, Igor, 79539 Lörrach (DE)
(74) Vertreter: Laufer, Michael
(86) Internationale Anmeldenummer: PCT/EP2019/082052
(87) Internationale Veröffentlichungsnummer: WO 2020/126289

(56) Entgegenhaltungen:
- WO-A1-2005/026682
- DE-A1- 3 106 835
- DE-A1-102010 035 965
- US-A- 3 492 872
- US-A1- 2007 095 146

## Beschreibung

Die Erfindung betrifft einen Druckmessaufnehmer, mit
einem Drucksensor, und
einem dem Drucksensor vorgeschalteten Druckmittler, der eine Trennmembran umfasst, deren Außenseite mit einem Druck beaufschlagbar ist und unter der eine Druckempfangskammer eingeschlossen ist, und
einem an die Druckempfangskammer angeschlossenen, mit einer Druck übertragenden Flüssigkeit gefüllten, hydraulischen Druckübertragungspfad, der den auf die Außenseite der Trennmembran einwirkenden Druck auf den Drucksensor überträgt.

Druckmessaufnehmer werden in einer Vielzahl von unterschiedlichen Industriezweigen zur Messung von Drücken eingesetzt.

Bei Druckmessaufnehmern der eingangs genannten Art steht die den Druck übertragende Flüssigkeit unter einem in dem hydraulischen Druckübertragungspfad herrschenden Innendruck. Dieser Innendruck folgt dem von außen auf die Trennmembran einwirkenden, zu messenden Druck und ist folglich umso geringer ist, je geringer der zu messende Druck ist. Zugleich weist die den zu messenden Druck übertragenden Flüssigkeit einen druck- und temperaturabhängigen Dampfdruck auf, der zu führt, dass sich im hydraulischen Druckübertragungspfads eine Gasphase ausbildet, die umso stärker ausgeprägt ist, je kleiner der Innendruck ist, und die umso stärker ausgeprägt ist, je größer die Temperatur ist, der die Flüssigkeit ausgesetzt ist. Je stärker die Gasphase ausgeprägt ist, umso stärker beeinträchtigt sie die Druckübertragungseigenschaften des hydraulischen Druckübertragungspfads. Beeinträchtigungen der Druckübertragungseigenschaften führen zu einer dementsprechenden Verschlechterung der mit dem Druckmessaufnehmer erzielbaren Messgenauigkeit.

Entsprechend können Druckmessaufnehmer der eingangs genannten Art nur zur Messung von Drücken eingesetzt werden, die größer als ein vom Dampfdruck der verwendeten Flüssigkeit abhängiger Mindestdruck sind.

Darüber hinaus können sie nur bei Temperaturen eingesetzt werden, die kleiner als eine vom Dampfdruck der verwendeten Flüssigkeit abhängige Maximaltemperatur sind. Beides führt sowohl für sich genommen als auch in Kombination zu einer Beschränkung des Einsatzbereichs, in dem Druckmessaufnehmer der eingangs genannten Art eingesetzt werden können.

Aus dem Stand der Technik sind die US 2007/095146 A1, die WO 2005/026682 A1, die DE 10 2010 035965 A1, die US 3 492 872 A und die DE 31 06 835 A1 bekannt geworden. Die US 2007/095146 A1 offenbart einen ölgefüllten Drucksensor, bei dem der gemessene Druck auf eine nachgiebige Isoliermembran aufgebracht wird, wodurch der Druck des internen Öls ansteigt, bis er dem Außendruck entspricht. Die WO 2005/026682 A1 und die DE 10 2010 035965 A1 offenbaren jeweils einen Druckmessumformer mit einer Messkammer, die durch eine Trennmembran von einem zu messenden Medium getrennt ist. Die US 3 492 872 A offenbart einen Differenzdruckmessumformer und die DE 31 06 835 A1 offenbart eine Differenzdruck-Messeinheit.

Es ist eine Aufgabe der Erfindung einen Druckmessaufnehmer der eingangs genannten Art anzugeben, der in einem größeren Einsatzbereich eingesetzt werden kann.

Hierzu umfasst die Erfindung einen Druckmessaufnehmer, mit
einem Drucksensor,
einem dem Drucksensor vorgeschalteten Druckmittler, der eine Trennmembran umfasst, deren Außenseite mit einem Druck beaufschlagbar ist und unter der eine Druckempfangskammer eingeschlossen ist, und
einem an die Druckempfangskammer angeschlossenen, mit einer Druck übertragenden Flüssigkeit gefüllten, hydraulischen Druckübertragungspfad, der den auf die Außenseite der Trennmembran einwirkenden Druck auf den Drucksensor überträgt,
der sich dadurch auszeichnet, dass der Druckmittler eine mittels einer an den Drucksensor und/oder an einen Temperatursensor angeschlossenen Steuerung ansteuerbare Auslenkeinrichtung umfasst, die dazu ausgestaltet ist zu durch die Steuerung anhand eines fortlaufend mittels des Drucksensor gemessenen Drucks und/oder einer fortlaufend mittels des Temperatursensors gemessenen Temperatur bestimmten Zeiten eine die Trennmembran in Richtung deren Membranbett auslenkende Kraft auf die Trennmembran oder ein mit der Trennmembran verbundenes Element auszuüben, wobei die Trennmembran magnetisch oder ferromagnetisch ist oder mit einem magnetischen oder ferromagnetischen Element verbunden ist, und
die Auslenkeinrichtung einen Elektromagnet umfasst, der dazu ausgebildet ist zu durch die Steuerung vorgegebenen Zeiten die die Trennmembran in Richtung deren Membranbett auslenkende Kraft auf die magnetische oder ferromagnetische Trennmembran oder das mit der Trennmembran verbundene magnetische oder ferromagnetische Element auszuüben, wobei der Elektromagnet im Druckmittler integriert ist,
eine Spule des Elektromagneten derart ausgerichtet ist, dass eine Verlängerung von deren Längsachse parallel zur Flächennormale auf die Trennmembran durch die Mitte der Trennmembran hindurch verläuft,
die Spule derart angeordnet ist, dass sie einen Abschnitt des von der Druckempfangskammer zum Drucksensor verlaufenden Druckübertragungspfads außenseitlich allseitig umgibt, und/oder der Elektromagnet einen zumindest abschnittweise von der Spule umgebenen hohlzylindrischen Kern umfasst, durch den ein in der Druckempfangskammer mündender Endbereich des hydraulischen Druckübertragungspfad hindurch verläuft, wobei der Druckmessaufnehmer
eine an den Elektromagnet anschließbare oder angeschlossene Auslenkungsmessschaltung umfasst, die derart ausgebildet ist, dass sie eine von dem auf die Trennmembran einwirkenden Druck abhängige Auslenkung der Trennmembran bei ausgeschalteter Auslenkeinrichtung anhand einer von der Auslenkung der Trennmembran abhängigen Eigenschaft des Elektromagneten, einer Induktivität des Elektromagneten oder einer von der Induktivität des Elektromagneten abhängigen Größe bestimmt, und
eine Prüfeinrichtung umfasst, die derart ausgebildet ist, dass sie die Funktionsfähigkeit und/oder die Messgenauigkeit des Druckmessaufnehmer bei ausgeschalteter Auslenkeinrichtung anhand des mittels des Drucksensors gemessenen Drucks und der parallel hierzu mittels der Auslenkungsmessschaltung ermittelten Auslenkung der Trennmembran überprüft.

Erfindungsgemäße Druckmessaufnehmer bieten den Vorteil, dass sich eine mittels der Auslenkeinrichtung auf die Trennmembran ausgeübte Kraft auf den gesamten Druckmessaufnehmer wie eine der Kraft entsprechende Druckerhöhung des auf die Außenseite der Trennmembran einwirkenden Drucks auswirkt. Das Ausüben der Kraft führt somit zu einem der Kraft entsprechenden Anstieg des Innendrucks, der der Ausbildung der Gasphase entgegen wirkt. Die Kraft wirkt somit in Bezug auf die Ausbildung der Gasphase genauso, wie eine bei gleichbleibender Temperatur erfolgende Druckerhöhung des zu messenden Drucks oder eine bei gleichbleibendem zu messenden Druck erfolgende Temperaturabsenkung der Temperatur. Das führt dazu, dass erfindungsgemäße Druckmessaufnehmer in einem größeren Einsatzbereich eingesetzt werden können als baugleiche Druckmessaufnehmer ohne eine auf die oben genannte Weise angesteuerte Auslenkungseinrichtung.

Ein weiterer Vorteil besteht darin, dass die Kraft unmittelbar auf die Trennmembran oder das damit verbundene Element ausgeübt wird. Hierdurch kann sie in definierter Weise unabhängig von dem auf die Trennmembran wirkenden Druck, der Temperatur und den Druckübertragungseigenschaften der Flüssigkeit vorgegeben werden.

Eine erste Weiterbildung zeichnet sich dadurch aus, dass die Trennmembran aus einem Edelstahl oder einem austenitischen Edelstahl besteht, oder die Trennmembran zumindest abschnittweise oder insgesamt aus einem magnetischen Material, aus einem ferromagnetischen Material, aus einem ferromagnetischen Stahl, aus einem ferritischen Stahl, aus einem Duplex-Stahl oder aus einem Superduplex-Stahl besteht.

Eine weitere Weiterbildung zeichnet sich dadurch aus, dass das mit der Trennmembran verbundene magnetische oder ferromagnetische Element eine auf einer in die Druckempfangskammer hinein weisenden Innenseite der Trennmembran angeordnete Scheibe umfasst, wobei die Scheibe
a) aus einem magnetischen oder ferromagnetischen Material, aus einer magnetischen oder ferromagnetischen Legierung, aus einem ferromagnetischen Stahl, aus einem ferritischen Stahl, aus einem Duplex-Stahl, aus einem Superduplex-Stahl, aus Eisen, aus Gusseisen, aus einer magnetischen oder ferromagnetischen Keramik, aus einer ferritischen Keramik oder aus einem Eisenoxid besteht,
b) als Beschichtung oder als galvanische Beschichtung auf die Trennmembran aufgebracht oder durch eine Fügung oder eine Lötung mit der Trennmembran verbunden ist,
c) bei einer Materialstärke der Trennmembran von 25 µm bis 200 µm eine Scheibendicke von 0,1 µm bis 500 µm aufweist, bei einer Materialstärke der Trennmembran von 25 µm bis 100 µm eine Scheibendicke von 0,1 µm bis 300 µm aufweist oder bei einer Materialstärke der Trennmembran von
   50 µm bis 200 µm eine Scheibendicke von 10 µm bis 500 µm aufweist, und/oder
d) einen Durchmesser aufweist, der geringer als ein Durchmesser der Trennmembran ist und/oder bei einem Durchmesser der Trennmembran von 20 mm bis 90 mm einen Durchmesser von 2 mm bis 15 mm aufweist, wobei die Scheibe konzentrisch zur Trennmembran angeordnet ist.

Eine weitere Weiterbildung zeichnet sich dadurch aus, dass das mit der Trennmembran verbundene Element einen auf einer in die Druckempfangskammer hinein weisenden Innenseite der Trennmembran montierten Permanentmagnet umfasst. Insbesondere zeichnet sich die Weiterbildung dadurch aus, dass sich der Permanentmagnet in einen an die Druckempfangskammer angrenzenden Endbereich des Druckübertragungspfades hinein erstreckt, der außenseitlich zumindest abschnittweise von einer Spule des Elektromagneten umgeben ist.

Eine weitere Weiterbildung zeichnet sich dadurch aus, dass der Elektromagnet derart ausgerichtet ist, dass die damit auf die Trennmembran oder das auf der Innenseite der Trennmembran mit einem die Trennmembranmitte umfassenden zentralen Bereich der Trennmembran verbundene Element ausübbare magnetische Anziehungskraft in einer parallel zur Flächennormale auf die Trennmembran durch eine Mitte der Trennmembran hindurch verlaufenden Richtung maximal ist.

Eine sechste Weiterbildung zeichnet sich dadurch aus, dass die Steuerung und die Auslenkeinrichtung derart ausgebildet sind, dass die Auslenkeinrichtung mittels der Steuerung einschaltbar und ausschaltbar ist und/oder die Auslenkeinrichtung im eingeschalteten Zustand entweder eine konstante Kraft vorgegebener Größe oder eine Kraft einer mittels der Steuerung vorgegebenen Größe auf die Trennmembran ausübt.

### Weitere Weiterbildungen zeichnen sich dadurch aus, dass

a) die Steuerung derart ausgebildet ist, dass sie die Auslenkeinrichtung in Abhängigkeit von dem mittels des Drucksensors gemessenen Druck einschaltet, wenn der bei ausgeschalteter Auslenkeinrichtung mittels des Drucksensors gemessene Druck eine vorgegebene Untergrenze unterschreitet und die Auslenkeinrichtung ausschaltet, wenn der bei eingeschalteter Auslenkeinrichtung mittels des Drucksensors gemessene Druck eine vorgegebene Obergrenze überschreitet,
b) die Steuerung derart ausgebildet ist, dass sie die Auslenkeinrichtung einschaltet, wenn die bei ausgeschalteter Auslenkeinrichtung mittels des Temperatursensors gemessene Temperatur eine vorgegebene Temperaturobergrenze überschreitet, und die Auslenkeinrichtung ausschaltet, wenn die bei eingeschalteter Auslenkeinrichtung mittels des Temperatursensors gemessene Temperatur eine vorgegebene Temperaturuntergrenze unterschreitet, oder
c) die Steuerung derart ausgebildet ist, dass sie
   c1) anhand des gemessenen Drucks und der gemessenen Temperatur eine Hilfsgröße bestimmt, indem sie von dem gemessenen Druck einen von der gemessenen Temperatur abhängigen, mit steigender Temperatur ansteigenden Wert abzieht,
   c2) die Auslenkeinrichtung einschaltet, wenn die bei ausgeschalteter Auslenkeinrichtung bestimmte Hilfsgröße eine vorgegebene Hilfsgrößenuntergrenze unterschreitet, und
   c3) die Auslenkeinrichtung ausschaltet, wenn die bei eingeschalteter Auslenkeinrichtung bestimmte Hilfsgröße eine vorgegebene Hilfsgrößenobergrenze überschreitet.

Eine Weiterbildung der letztgenannten Weiterbildungen zeichnet sich dadurch aus, dass
a) die Obergrenze echt größer als die Summe aus der Untergrenze und einem durch die Kraft bewirkten Druckanstieg des gemessenen Drucks ist,
b) die Temperaturobergrenze echt größer als die Temperaturuntergrenze ist, oder
c) die Hilfsgrößenobergrenze echt größer als die Summe aus der Hilfsgrößenuntergrenze und einem durch die Kraft bewirkten Druckanstieg des gemessenen Drucks ist.

Eine weitere Weiterbildung zeichnet sich dadurch aus, dass die Steuerung derart ausgebildet ist, dass sie die Größe der von der Auslenkeinrichtung ausgeübten Kraft anhand des gemessenen Drucks und/oder der gemessenen Temperatur, sowie der Größe der zuvor auf Trennmembran oder das damit verbundene Element ausgeübten Kraft stufenweise oder kontinuierlich anpasst.

Eine weitere Weiterbildung zeichnet sich dadurch aus, dass der Druckmessaufnehmer derart ausgebildet ist, dass er ein Druckmessergebnis ausgibt, das bei ausgeschalteter Auslenkeinrichtung dem mittels des Drucksensors gemessenen Druck entspricht, und das bei eingeschalteter Auslenkeinrichtung einer Differenz zwischen dem mittels des Drucksensors gemessenen Druck und einem durch die Kraft bewirkten Druckanstieg des gemessenen Drucks entspricht.

Die Erfindung und deren Vorteile werden nun anhand der Figuren der Zeichnung, in denen drei Ausführungsbeispiele dargestellt sind, näher erläutert. Gleiche Elemente sind in den Figuren mit gleichen Bezugszeichen versehen. Um Bauteile von zum Teil sehr unterschiedlicher Größe darstellen zu können, wurde eine nicht immer maßstabsgetreue Darstellung gewählt.
- Fig. 1 zeigt:: einen Druckmessaufnehmer mit einem Druckmittler mit einer magnetischen oder ferromagnetischen Trennmembran;
- Fig. 2 zeigt:: einen Druckmittler auf dessen Trennmembran eine magnetische oder ferromagnetische Scheibe angeordnet ist;
- Fig. 3 zeigt:: einen Druckmittler mit einer mit einem Permanentmagnet verbundenen Trennmembran;
- Fig. 4 zeigt:: einen zeitlichen Verlaufs eines auf eine Außenseite einer Trennmembran einwirkenden Drucks, und
- Fig. 5 zeigt:: ein Beispiel eines in dem in Fig. 4 dargestellten Zeitraum mit einem Drucksensor eines erfindungsgemäßen Druckmessumformers gemessenen Drucks.

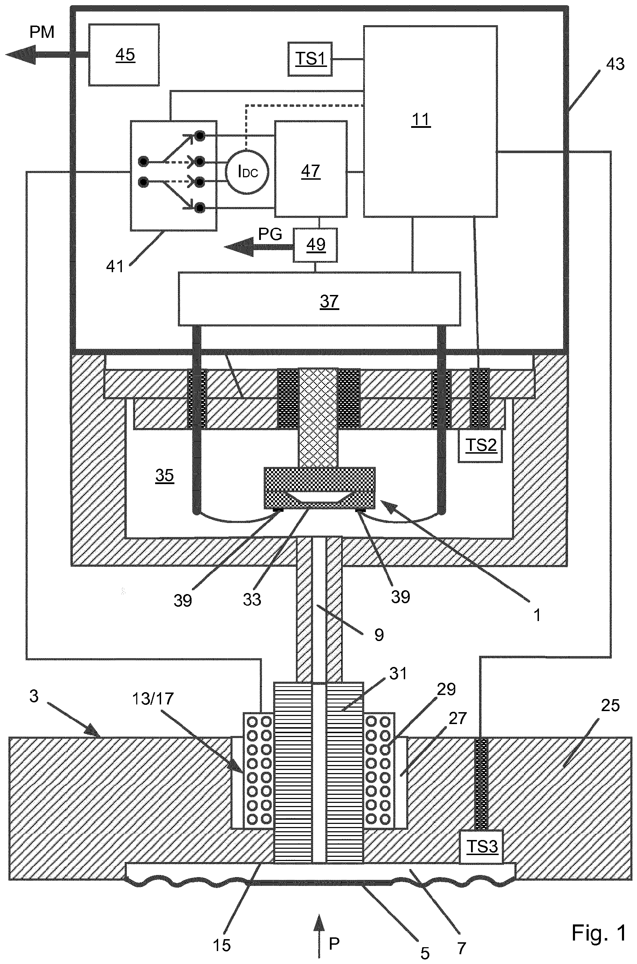

Fig. 1 zeigt ein Beispiel eines erfindungsgemäßen Druckmessaufnehmers, der einen Drucksensor 1 und einen dem Drucksensor 1 vorgeschalteten Druckmittler 3 umfasst. Der Druckmittler 3 umfasst eine Trennmembran 5, deren Außenseite mit einem vom Druckmessaufnehmer zu messenden Druck p beaufschlagbar ist. Unter der Trennmembran 5 ist eine Druckempfangskammer 7 eingeschlossen. An die Druckempfangskammer 7 ist ein mit einer Druck übertragenden Flüssigkeit gefüllter, hydraulischer Druckübertagungspfad 9 angeschlossen, der den auf die Außenseite der Trennmembran 5 einwirkenden Druck p auf den Drucksensor 1 überträgt.

Erfindungsgemäße Druckmessaufnehmer zeichnen sich dadurch aus, dass deren Druckmittler 3 eine mittels einer an den Drucksensor 1 und/oder an einen Temperatursensor TS1, TS2, TS3 angeschlossenen Steuerung 11 ansteuerbare Auslenkeinrichtung 13 umfasst, die dazu ausgestaltet ist zu durch die Steuerung 11 anhand eines fortlaufend mittels des Drucksensor 1 gemessenen Drucks p_{gem} und/oder einer fortlaufend mittels des Temperatursensors TS1, TS2, TS3 gemessenen Temperatur T_{gem} bestimmten Zeiten eine die Trennmembran 5 in Richtung deren Membranbett 15 auslenkende Kraft Kauf die Trennmembran 5 auszuüben.

Erfindungsgemäße Druckmessaufnehmer weisen die eingangs genannten Vorteile auf. Dabei können einzelne Komponenten unterschiedliche für sich genommen oder auch in Kombination miteinander einsetzbare Ausgestaltungen aufweisen.

Eine besonders bevorzugte in Fig. 1 dargestellte Ausführungsform sieht vor, dass die Trennmembran 5 magnetisch oder ferromagnetisch ist und die Auslenkeinrichtung 13 einen Elektromagnet 17 umfasst, der dazu ausgebildet ist zu durch die Steuerung 11 vorgegebenen Zeiten die die Trennmembran 5 in Richtung deren Membranbett 15 auslenkende Kraft Kauf die Trennmembran 5 auszuüben.

Bei dieser Ausführungsform besteht die Trennmembran 5 zumindest abschnittweise, vorzugsweise jedoch insgesamt aus einem magnetischen oder ferromagnetischen Material. Insoweit kann die Trennmembran 5 z.B. aus einer magnetischen Legierung, aus einer ferromagnetischen Legierung, aus einem ferromagnetischen Stahl, aus einem ferritischen Stahl, aus einem Duplex-Stahl oder aus einem Superduplex-Stahl bestehen.

Diese Ausführungsform bietet den Vorteil, dass zur Erzeugung der die Trennmembran 5 auslenkenden Kraft K keine Komponenten erforderlich sind, die Druckübertragungseigenschaften der Trennmembran 5 verändern.

Alternativ kann die Trennmembran 5 mit einem magnetischen oder ferromagnetischen Element verbunden sein und die Auslenkeinrichtung 13 einen Elektromagneten 17 umfassen, der dazu ausgebildet ist zu durch die Steuerung 11 vorgegebenen Zeiten die die Trennmembran 5 in Richtung deren Membranbett 15 auslenkende magnetische Kraft K auf das mit der Trennmembran 5 verbundene Element auszuüben.

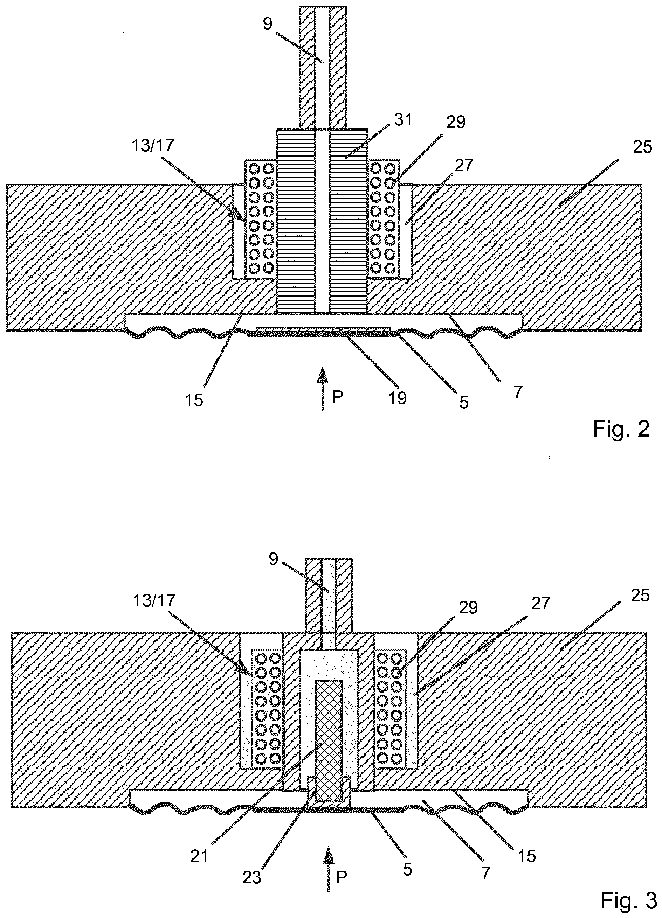

Fig. 2 zeigt als ein Beispiel hierzu einen anstelle des in Fig. 1 dargestellten Druckmittlers 3 einsetzbaren Druckmittler, bei dem auf einer in die Druckempfangskammer 7 hinein weisenden Innenseite der Trennmembran 5 eine mit der Trennmembran 5 verbundene magnetische oder ferromagnetische Scheibe 19 angeordnet ist. Diese Ausführungsform bietet den Vorteil, dass das Material der Trennmembran 5 innerhalb weiterer Grenzen frei wählbar ist und die Trennmembran 5 optional auch aus einem nicht magnetischen Material, wie z.B. einem Edelstahl, insb. einem austenitischen Edelstahl, bestehen kann.

Als Scheibe 19 eignet sich eine Scheibe 19 aus einem magnetischen oder ferromagnetischen Material. Insoweit kann die Scheibe 19 z.B. aus einer magnetischen oder ferromagnetischen Legierung, aus einem ferromagnetischen Stahl, aus einem ferritischen Stahl, aus einem Duplex-Stahl, aus einem Superduplex-Stahl, aus Eisen oder aus Gusseisen bestehen. Alternativ kann die Scheibe 19 aber auch aus einer magnetischen oder ferromagnetischen Keramik oder aus einer ferritischen Keramik, wie z.B. einem Eisenoxid, bestehen.

Die Scheibe 19 kann je nach Scheibendicke und Material der Scheibe 19, z.B. als Beschichtung, z.B. als galvanische Beschichtung, auf die Trennmembran 5 aufgebracht oder durch eine Fügung, wie z.B. eine Lötung, mit der Trennmembran 5 verbunden sein.

Alternativ oder zusätzlich hierzu weist die Scheibe 19 vorzugsweise eine Schichtdicke von 0,1 µm bis 500 µm auf. Im Vergleich dazu kann die Trennmembran 5 z.B. eine Materialstärke im Bereich von 25 µm bis 200 µm aufweisen. Dabei wird die Materialstärke der Trennmembran 5 vorzugsweise umso größer angesetzt, je größer die mittels des Druckmessaufnehmers zu messenden Drücke p sind. Insoweit weist die Scheibe 19 bei einer Materialstärke der Trennmembran 5 von 25 µm bis 100 µm vorzugsweise eine Scheibendicke von 0,1 µm bis 300 µm auf, wohingegen sie bei einer Materialstärke der Trennmembran 5 von 50 µm bis 200 µm vorzugsweise eine Scheibendicke von 10 µm bis 500 µm aufweist.

Grundsätzlich kann die Scheibe 19 bei vergleichsweise geringer Scheibendicke als vollflächige Beschichtung auf die Trennmembran 5 aufgebracht sein. Vorzugsweise weist die konzentrische zur Trennmembran 5 angeordnete Scheibe 19 jedoch einen Durchmesser auf, der geringer als ein Durchmesser der Trennmembran 5 ist. Insoweit weist die Scheibe 19 bei einem Durchmesser der Trennmembran 5 von 20 mm bis 90 mm vorzugsweise einen Durchmesser von 2 mm bis 15 mm auf. Diese Ausführungsform bietet den Vorteil, dass die Druckübertragungseigenschaften der Trennmembran 5 durch die hier lediglich mit einem mittleren Membranbereich der Trennmembran 5 verbundene Scheibe 19 auch dann nur in vergleichsweise geringem Maße verändert werden, wenn die Scheibe 19 eine vergleichsweise große Scheibendicke aufweist und/oder die Scheibendicke größer als die Materialstärke der Trennmembran 5 ist.

Fig. 3 zeigt als weiteres Beispiel einen anstelle des in Fig. 1 dargestellten Druckmittlers 3 einsetzbaren Druckmittler, bei dem auf einer in die Druckempfangskammer 7 hinein weisenden Innenseite der Trennmembran 5 ein Permanentmagnet 21 montiert ist. Dieser Permanentmagnet 21 kann z.B. auf einer auf der Innenseite der Trennmembran 5 angeordneten, mit der Trennmembran 5 verbundenen Halterung 23 montiert sein.

Auch diese Ausführungsform bietet den Vorteil, dass die Trennmembran 5 aus einem nicht magnetischen Material, wie z.B. einem Edelstahl, insb. einem austenitischen Edelstahl, bestehen kann. Darüber hinaus bietet sie den Vorteil, dass über den mit der Trennmembran 5 verbundenen Permanentmagneten 21 mittels des Elektromagneten 17 größere Kräfte K auf die Trennmembran 5 ausgeübt werden können, als das bei den in Fig. 1 und 2 dargestellten Varianten möglich ist.

Unabhängig davon, ob die Trennmembran 5 magnetisch oder ferromagnetisch ist oder mit einem magnetischen oder ferromagnetischen Element, wie z.B. der in Fig. 2 dargestellten Scheibe 19 oder dem in Fig. 3 dargestellten Permanentmagnet 21, verbunden ist, ist der Elektromagnet 17 vorzugsweise im Druckmittler 3 integriert. Das spart Platz und bietet aufgrund des damit verbundenen geringen Abstands zwischen dem Elektromagnet 17 und der magnetischen oder ferromagnetischen Trennmembran 5 bzw. dem mit der Trennmembran 5 verbundenen magnetischen oder ferromagnetischen Element den Vorteil, dass durch den Elektromagnet 17 aufgrund des geringen Abstands dementsprechend große Kräfte K auf die Trennmembran 5 ausgeübt werden können.

Fig. 1 bis 3 zeigen hierzu Beispiele, bei denen der Druckmittler 3 einen Träger 25 umfasst, auf dessen Stirnseite die nach außen durch die Trennmembran 5 abgeschlossene Druckempfangskammer 7 angeordnet ist. Dort weist der Träger 25 auf dessen der Stirnseite gegenüberliegenden Rückseite eine Ausnehmung 27 auf, in die der Elektromagnet 17 oder zumindest ein Abschnitt des Elektromagneten 17 eingesetzt ist.

Alternativ oder zusätzlich zu den vorgenannten Ausgestaltungen ist der Elektromagnet 17 vorzugsweise derart ausgerichtet, dass die damit auf die Trennmembran 5 oder das damit verbundene Element ausübbare magnetische Anziehungskraft in einer parallel zur Flächennormale auf die Trennmembran 5 durch eine Mitte der Trennmembran 5 hindurch verlaufenden Richtung maximal ist. In dem Fall ist auch das ggfs. vorgesehene mit der Trennmembran 5 verbundene Element vorzugsweise auf der Innenseite der Trennmembran 5 mit einem die Trennmembranmitte umfassenden zentralen Bereich der Trennmembran 5 verbunden. Bei dieser Ausführungsform bietet die Ausrichtung der Kraft K auf die Trennmembranmitte den Vorteil, dass hierdurch die durch eine Kraft K vorgegebener oder mittels der Steuerung 11 vorgebbarer Größe bewirkte Membranauslenkung maximal ist.

Fig. 1 bis 3 zeigen hierzu Ausführungsbeispiele, bei denen der Elektromagnet 17 jeweils eine Spule 29 umfasst, die derart ausgerichtet ist, dass eine Verlängerung von deren Längsachse parallel zur Flächennormale auf die Trennmembran 5 durch die Mitte der Trennmembran 5 hindurch verläuft. Alternativ oder zusätzlich hierzu ist die Spule 29 vorzugsweise derart angeordnet, dass sie einen Abschnitt des von der Druckempfangskammer 7 zum Drucksensor 1 verlaufenden Druckübertragungspfads 9 außenseitlich allseitig umgibt.

Optional kann der Elektromagnet 17 einen die mittels des Elektromagneten 17 ausübbare Kraft K erhöhenden, zumindest abschnittweise von der Spule 29 umgebenen Kern 31 umfassen. Bei dieser in Fig. 1 und 2 dargestellten Ausführungsform ist der Kern 31 vorzugsweise hohlzylindrisch und derart angeordnet, dass ein an die Druckempfangskammer 7 angrenzender Endbereich des hydraulischen Druckübertragungspfad 9 durch den Kern 31 hindurch verläuft.

Bei dem in Fig. 3 dargestellten Ausführungsbeispiel ist der Druckmittler 3 vorzugsweise derart ausgebildet, dass sich der Permanentmagnet 21 in einen an die Druckempfangskammer 7 angrenzenden Endbereich des Druckübertragungspfades 9 hinein erstreckt, der außenseitlich zumindest abschnittweise von der Spule 29 des Elektromagneten 17 umgeben ist. Dabei kann der Permanentmagnet 21 z.B. stabförmig ausgebildet sein.

Als Drucksensor 1 können aus dem Stand der Technik bekannte Drucksensoren eingesetzt werden. Fig. 1 zeigt als ein Beispiel hierzu einen Drucksensor 1, der eine mit dem zu messenden Druck zu beaufschlagende Messmembran 33 umfasst. Bei dem hier dargestellten Beispiel ist der Drucksensor 1 hierzu derart in einer an den Druckübertragungspfad 9 angeschlossenen, ebenfalls mit der den Druck übertragenden Flüssigkeit befüllten Druckmesskammer 35 angeordnet, dass ein in der Druckmesskammer 35 herrschender Innendruck auf die Außenseite der Messmembran 33 einwirkt. Zusätzlich umfasst der Drucksensor 1 einen elektromechanischen Wandler, der die druckabhängige Auslenkung der Messmembran 33 in eine elektrische Größe umwandelt. An den Wandler ist eine Druckmessschaltung 37 angeschlossen, die die druckabhängige Größe messtechnisch erfasst und einen mittels des Drucksensors 1 gemessenen Druck p_{gem} - z.B. in Form eines dem gemessenen Druck p_{gem} entsprechenden Messwerts oder eines dem gemessenen Druck p_{gem} entsprechenden Messsignals- zur Verfügung stellt.

Fig. 1 zeigt als Beispiel einen piezoresistiven Wandler, der zu einer Brückenschaltung zusammengeschlossenen piezoresistiven Elemente 39 umfasst. Alternativ können aber auch Drucksensoren mit einem auf einem anderen Wandlerprinzip basierenden Wandler, wie z.B. einem kapazitiven Wandler, eingesetzt werden.

Die Steuerung 11 erfindungsgemäßer Druckmessaufnehmer ist dazu ausgestaltet die Auslenkeinrichtung 13 derart anzusteuern, dass die Auslenkeinrichtung 13 zu durch die Steuerung 11 anhand des fortlaufend mittels des Drucksensor 1 gemessenen Drucks p_{gem} und/oder der fortlaufend mittels des Temperatursensors TS1, TS2, TS3 gemessenen Temperatur T_{gem} bestimmten Zeiten eine die Trennmembran 5 in Richtung deren Membranbett 15 auslenkende Kraft K auf die Trennmembran 5 ausübt.

Dabei sind die Steuerung 11 und die Auslenkeinrichtung 13 vorzugsweise derart ausgebildet, dass die Auslenkeinrichtung 13 mittels der Steuerung 11 einschaltbar und ausschaltbar ist und/oder derart ausgebildet, dass die Auslenkeinrichtung 13 im eingeschalteten Zustand entweder eine konstante Kraft K vorgegebener Größe oder eine Kraft K einer mittels der Steuerung 11 vorgegebbaren Größe auf die Trennmembran 5 ausübt. Im ausgeschalteten Zustand übt die Auslenkeinrichtung 13 keine Kraft auf die Trennmembran 5 aus.

Fig. 1 zeigt hierzu ein Beispiel, bei dem der Druckmessaufnehmer eine elektronisch steuerbare Schalteinrichtung 41 umfasst, über die die Auslenkeinrichtung 13 eingeschaltet und ausgeschaltet wird. Diese Schalteinrichtung 41 kann als Bestandteil der Steuerung 11 ausgebildet sein oder derart mit der Steuerung 11 verbunden sein, dass sie von der Steuerung 11 angesteuert wird. Fig. 1 zeigt hierzu ein Ausführungsbeispiel, bei dem die Spule 29 über die Schalteinrichtung 41 mit einer im Druckmessaufnehmer integrierten Gleichstromquelle I_{DC} verbindbar ist. Im eingeschalteten Zustand übt der Elektromagnet 17 eine Kraft K auf die Trennmembran 5 oder das damit verbundene Element aus, deren Größe anhand der Größe des Stroms einstellbar ist. Insoweit kann die Gleichstromquelle I_{DC} entweder derart ausgebildet sein, dass sie einen Strom vorgegebener Größe erzeugt. In dem Fall weist die Kraft K bei eingeschalteter Auslenkeinrichtung 13 einen konstanten vorgegebenen Wert auf. Alternativ kann die Gleichstromquelle I_{DC} aber auch als mittels der Steuerung 11 regelbare Gleichstromquelle I_{DC} ausgebildet sein, die einen Strom einer anhand der Steuerung 11 vorgegebbaren Größe erzeugt. Bei dieser Ausführungsform wird die Größe der Kraft K durch die Steuerung 11 über die regelbare Größe des Stroms vorgegeben.

Die Ansteuerung der Auslenkeinrichtung 13 kann je nach Verwendungszweck des Druckmessaufnehmers auf unterschiedliche Weise ausgeführt werden.

Eine Variante der Erfindung sieht vor, dass die Steuerung 11 derart ausgebildet ist, dass sie die Auslenkeinrichtung 13 in Abhängigkeit von dem mittels des Drucksensors 1 gemessenen Drucks p_{gem} ein- und ausschaltet. Hierzu kann die Steuerung 11 an den Drucksensor 1 oder an die Druckmessschaltung 37 angeschlossen sein oder die Druckmessschaltung 37 umfassen.

Bei dieser Variante ist die Steuerung 11 vorzugsweise derart ausgebildet, dass sie die Auslenkeinrichtung 13 einschaltet, wenn der bei ausgeschalteter Auslenkeinrichtung 13 mittels des Drucksensors 1 gemessene Druck p_{gem} eine vorgegebene Untergrenze pₘᵢₙ unterschreitet und die Auslenkeinrichtung 13 ausschaltet, wenn der bei eingeschalteter Auslenkeinrichtung 13 mittels des Drucksensors 1 gemessene Druck p_{gem} eine vorgegebene Obergrenze pₘₐₓ überschreitet.

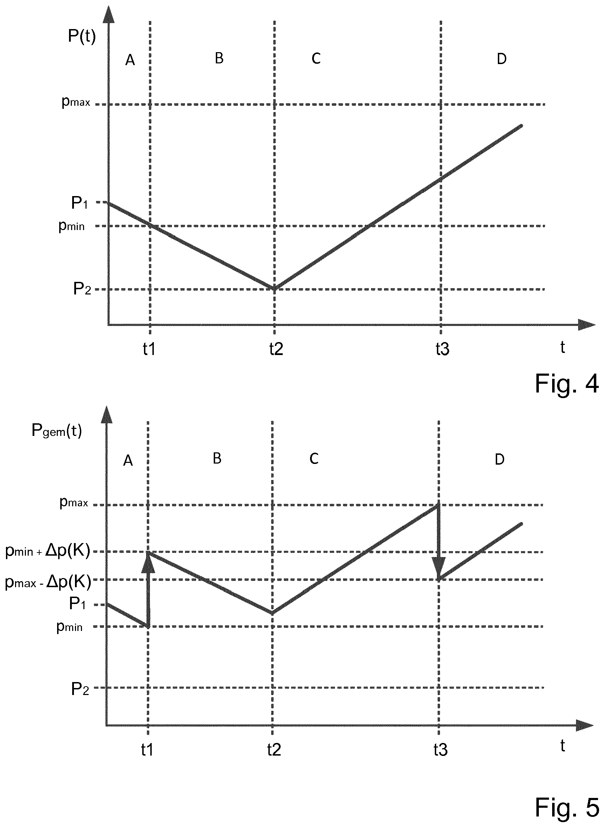

Fig. 4 zeigt hierzu ein Beispiel eines zeitlichen Verlaufs p(t) des auf die Außenseite der Trennmembran 5 einwirkenden, zu messenden Drucks p, der ausgehend von einem oberhalb der Untergrenze pₘᵢₙ liegenden ersten Druck p1 auf einen unterhalb der Untergrenze pₘₐₓ liegenden zweiten Druck p2 abfällt und anschließend stetig ansteigt. Fig. 5 zeigt den in dem in Fig. 4 dargestellten Zeitraum zeitgleich mit dem Drucksensor 1 gemessenen Druck p_{gem}, wie er sich ergibt, wenn die Auslenkeinrichtung 13 derart betrieben wird, dass sie im eingeschalteten Zustand eine konstante Kraft K vorgegebener Größe auf die Trennmembran 5 oder das damit verbundene Element ausübt.

Der Verlauf p(t) umfasst einen ersten Zeitbereich A, in dem der zu messende Drucks p größer gleich der Untergrenze pₘᵢₙ ist. In diesem Zeitbereich A ist die Auslenkeinrichtung 13 ausgeschaltet. Folglich stimmt der dargestellte mittels des Drucksensors 1 gemessene Druck p_{gem}(t) mit dem zu messenden Druck p(t) überein und nimmt stetig ab. Zum Zeitpunkt t1 unterschreiten der zu messende Druck p(t1) und der gemessene Drucks p_{gem}(t1) die Untergrenze pₘᵢₙ. Das wird von der Steuerung 11 anhand des gemessene Drucks p_{gem}(t1) erkannt, die daraufhin die Auslenkeinrichtung 13 einschaltet. Das Einschalten der Auslenkeinrichtung 13 wirkt wie eine der konstanten Kraft K entsprechende Druckerhöhung Δp(K) des zu messenden Drucks p. Entsprechend steigt der gemessene Drucks p_{gem}(t1) zum Zeitpunkt t1 sprunghaft um die Druckerhöhung Δp(K) an. Im nachfolgenden Zeitbereich B fällt der zu messende Druck p bis zum Zeitpunkt t2 weiter ab und steigt dann in den nachfolgenden Zeitbereichen C und D wieder an. Dabei bleibt die Auslenkeinrichtung 13 solange eingeschaltet, bis der nun von der konstanten Kraft K und dem zu messenden Druck p abhängige gemessene Druck p_{gem}(t3) zum Zeitpunkt t3 die Obergrenze pₘₐₓ überschreitet. Das wird von der Steuerung 11 anhand des gemessenen Drucks p_{gem}(t3) erkannt, die daraufhin die Auslenkeinrichtung 13 wieder ausschaltet. Das Ausschalten der Auslenkeinrichtung 13 wirkt wie eine der dadurch wegfallenden Kraft K entsprechende Druckerniedrigung des zu messenden Drucks p. Entsprechend sinkt der gemessene Druck p_{gem}(t3) zum Zeitpunkt t3 sprunghaft um einen Druckabfall ab, der betragsmäßig gleich der zuvor durch das Einschalten der Auslenkeinrichtung 13 bewirkten Druckerhöhung Δp(K) ist. Folglich entspricht der in dem darauf folgenden Zeitraum D gemessene Druck p_{gem}(t) wieder dem zu messenden Druck p.

Optional ist die Obergrenze pₘₐₓ vorzugsweise derart vorgegeben, dass sie echt größer als die Summe aus der Untergrenze pₘᵢₙ und dem durch die Kraft K bewirkten Druckanstieg Δp(K) des gemessenen Drucks p_{gem}(t) ist. Das bietet den Vorteil, dass durch die Grenzwertdifferenz H1 zwischen Obergrenze pₘₐₓ und Untergrenze pₘᵢₙ sichergestellt ist, dass auch dann noch stabile Messbedingungen vorliegen, wenn der zu messende Druck p zeitlich um weniger als die Grenzwertdifferenz H1 um die Untergrenze pₘᵢₙ schwankt und/oder zeitlich um weniger als die Grenzwertdifferenz H1 um einen der Differenz zwischen der Obergrenze pₘₐₓ und dem Druckanstieg Δp(K) entsprechenden Wert schwankt.

Optional kann die Steuerung 11 derart ausgebildet sein, dass sie die Größe der von der Auslenkeinrichtung 13 ausgeübten Kraft K anhand des gemessenen Drucks p_{gem} und der Größe der zuvor auf die Trennmembran 5 oder das damit verbundene Element ausgeübten Kraft K stufenweise oder kontinuierlich anpasst.

Die Ansteuerung der Auslenkungseinrichtung 13 anhand des gemessenen Drucks p_{gem} bietet den Vorteil, dass der Druckmessaufnehmer in einem für den Druckmessaufnehmer vorgegebenen Temperaturbereich in einem vergrößerten Druckmessbereich eingesetzt werden kann, dessen Messbereichsuntergrenze um einen von dem Betrag des durch die Kraft K bzw. die größte Kraft K bewirkten Druckanstiegs Δp(K) abhängigen Wert kleiner als die Messbereichsuntergrenze eines baugleichen Druckmessaufnehmers ohne Auslenkeinrichtung 13 ist, und dessen Messbereichsobergrenze gleich der Messbereichsobergrenze des baugleichen Druckmessaufnehmers ohne Auslenkeinrichtung 13 ist.

Als Druck übertragende Flüssigkeit wird vorzugsweise eine möglichst inkompressible, einen möglichst geringen Dampfdruck aufweisende Flüssigkeit eingesetzt. Hierzu eignet sich z.B. ein Silikonöl oder aus dem Stand der Technik bekannte für diesen Zweck geeignete Spezialflüssigkeiten. Unabhängig von der Wahl der Flüssigkeit, ist der Dampfdruck der Flüssigkeit nicht nur von dem im Druckübertragungspfad 9 herrschenden Innendruck abhängig, sondern steigt darüber hinaus auch mit zunehmender Temperatur T an. Diese Temperaturabhängigkeit ist bei der Ansteuerung der Auslenkeinrichtung 13 zu berücksichtigen. Das kann z.B. durch eine dementsprechende Bemessung der Kraft K, der Obergrenze pₘₐₓ und der Untergrenze pₘᵢₙ erfolgen und führt zu einer Begrenzung des Temperaturbereichs, in dem der Druckmessaufnehmer eingesetzt werden kann.

Alternativ kann dem mit steigender Temperatur ansteigenden Dampfdruck aber auch dadurch entgegen gewirkt werden, dass die Steuerung 11 derart ausgebildet ist, dass sie die Auslenkeinrichtung 13 in Abhängigkeit von der mittels des Temperatursensors TS1, TS2, TS3 gemessenen Temperatur T_{gem} ansteuert. Bei dieser Variante ist der Temperatursensor TS1, TS2 vorzugsweise derart angeordnet, dass er in Kontakt mit der Druck übertragenden Flüssigkeit steht. Hierzu kann der Temperatursensor TS1, TS2 z.B. in der Druckempfangskammer 7 oder in der Druckmesskammer 35 angeordnet sein. Alternativ kann der Temperatursensor TS3 aber auch an anderer Stelle im Druckmessaufnehmer, z.B. in einem die Steuerung 11 umgebenden Elektronikgehäuse 43, untergebracht sein. Alle drei Positionen sind in Fig. 1 anhand der dort jeweils als ein mögliches Beispiel eingezeichneten Temperatursensoren TS1, TS2 und TS3 dargestellt.

Analog zu dem vorherigen Ausführungsbeispiel ist die Steuerung 11 des Druckmessaufnehmers bei dieser Variante optional vorzugsweise derart ausgebildet, dass sie die Auslenkeinrichtung 13 in Abhängigkeit von der mittels des an die Steuerung 11 angeschlossenen Temperatursensors TS1, TS2, TS3 gemessenen Temperatur T_{gem} ein- und ausschaltet. Dabei ist die Steuerung 11 vorzugsweise derart ausgebildet, dass sie die Auslenkeinrichtung 13 einschaltet, wenn die bei ausgeschalteter Auslenkeinrichtung 13 mittels des Temperatursensors TS1, TS2, TS3 gemessenen Temperatur T_{gem} eine vorgegebene Temperaturobergrenze Tₘₐₓ überschreitet und die Auslenkeinrichtung 13 ausschaltet, wenn die bei eingeschalteter Auslenkeinrichtung 13 mittels Temperatursensors TS1, TS2, TS3 gemessene Temperatur T_{gem} eine vorgegebene Temperaturuntergrenze Tₘᵢₙ unterschreitet.

Bei dieser Variante wird ausgenutzt, dass der durch die Kraft K bewirkte Druckanstieg Δp(K) im Druckübertragungspfad (9) der Ausbildung der Gasphase in gleicher Weise entgegenwirkt, wie eine dementsprechende von der Größe der Kraft K abhängige Temperaturabsenkung ΔT(K) dies täte.

Optional ist die Temperaturobergrenze Tₘₐₓ vorzugsweise derart vorgegeben, dass sie echt größer als die Temperaturuntergrenze Tₘᵢₙ ist. Dabei kann sie z.B. derart vorgegeben werden, dass sie größer gleich der Summe aus der Temperaturuntergrenze Tₘᵢₙ und der der Kraft K entsprechenden Temperaturabsenkung ΔT(K) ist. Auch hier bietet eine Grenzwertdifferenz H2 zwischen Temperaturobergrenze Tₘₐₓ und Temperaturuntergrenze Tₘᵢₙ den Vorteil, dass sichergestellt ist, dass auch dann noch stabile Messbedingungen vorliegen, wenn die Temperatur T zeitlich um weniger als die Grenzwertdifferenz H2 um die Temperaturuntergrenze Tₘᵢₙ oder die Temperaturobergrenze Tₘₐₓ schwankt.

Optional kann die Steuerung 11 bei dieser Variante derart ausgebildet sein, dass sie die Größe der von der Auslenkeinrichtung 13 ausgeübte Kraft K anhand der gemessenen Temperatur T_{gem} und der Größe der zuvor auf Trennmembran 5 oder das damit verbundene Element ausgeübten Kraft K stufenweise oder kontinuierlich anpasst.

Die Ansteuerung der Auslenkeinrichtung 13 anhand der gemessenen Temperatur T_{gem} bietet den Vorteil, dass der Druckmessaufnehmer in einem vergrößerten Temperaturbereich eingesetzt werden kann, dessen Temperaturbereichsobergrenze um einen der dem durch die Kraft K bzw. die größte Kraft K bewirkten Druckanstieg Δp(K) im Hinblick auf die Ausbildung der Gasphase entsprechenden Temperaturabsenkung ΔT(K) entsprechenden Wert größer als die Temperaturbereichsobergrenze eines baugleichen Druckmessaufnehmers ohne Auslenkeinrichtung 13 ist, und dessen
Temperaturbereichsuntergrenze gleich der Temperaturbereichsuntergrenze des baugleichen Druckmessaufnehmers ohne Auslenkeinrichtung 13 ist.

Unabhängig davon ob die Wirkung der Kraft als eine dementsprechende Druckerhöhung Δp(K) oder als eine dementsprechende Temperaturabsenkung ΔT(K) interpretiert wird, liegt die Wirkung jedoch nur einmal vor. Das kann bei Druckmessaufnehmern gemäß der zweiten Variante z.B. dadurch berücksichtigt werden, dass die Messbereichsobergrenze des Druckmessbereichs um einen dem Betrag der durch die Kraft K oder der maximalen Kraft K bewirkten Druckerhöhung Δp(K) entsprechenden Wert niedriger angesetzt wird, als die Messbereichsobergrenze eines baugleichen Druckmessaufnehmers ohne Auslenkungseinrichtung.

Alternativ kann der Druckabhängigkeit und der Temperaturabhängigkeit des Dampfdrucks der den Druck übertragenden Flüssigkeit dadurch Rechnung getragen werden, dass die Steuerung 11 derart ausgebildet ist, dass sie die Auslenkeinrichtung 13 in Abhängigkeit von dem mittels des Drucksensors 1 gemessenen Druck p_{gem} und der mittels des Temperatursensors TS1, TS2, TS3 gemessenen Temperatur T_{gem} ansteuert.

Bei dieser dritten Variante ist die Steuerung 11 vorzugsweise derart ausgebildet, dass sie anhand des gemessenen Drucks p_{gem} und der gemessenen Temperatur T_{gem} eine Hilfsgröße G(p_{gem}; T_{gem}) bestimmt, und die Auslenkeinrichtung 13 einschaltet, wenn die bei ausgeschalteter Auslenkeinrichtung 13 anhand des gemessenen Drucks p_{gem} und der gemessenen Temperatur T_{gem} bestimmte Hilfsgröße G(p_{gem}; T_{gem}) eine vorgegebene Hilfsgrößenuntergrenze Gₘᵢₙ unterschreitet und die Auslenkeinrichtung 13 ausschaltet, wenn die bei eingeschalteter Auslenkeinrichtung 13 anhand des gemessenen Drucks p_{gem} und der gemessenen Temperatur T_{gem} bestimmte Hilfsgröße G(p_{gem}; T_{gem}) eine vorgegebene Hilfsgrößenobergrenze Gₘₐₓ überschreitet. Die Hilfsgröße G(p_{gem}; T_{gem}) kann z.B. gemäß: G(p_{gem}; T_{gem}) = p_{gem} - W(T_{gem}) dadurch bestimmt werden, dass von dem gemessenen Druck p_{gem} ein von der Temperatur abhängiger Wert W(T_{gem}) abgezogen wird, dessen Betrag mit steigender Temperatur ansteigt.

Analog zu den vorherigen Ausführungsbeispielen kann die Hilfsgrößenobergrenze Gₘₐₓ auch hier derart vorgegeben werden, dass sie echt größer als die Summe aus der Hilfsgrößenuntergrenze Gₘᵢₙ und dem von der Kraft K abhängigen Druckanstieg Δp(K) ist. Alternativ oder zusätzlich hierzu kann die Steuerung 11 derart ausgebildet sein, dass sie die Größe der von der Auslenkeinrichtung 13 ausgeübte Kraft K anhand der Hilfsgröße G(p_{gem}; T_{gem}) und der Größe der zuvor auf Trennmembran 5 oder das damit verbundene Element ausgeübten Kraft K stufenweise oder kontinuierlich anpasst.

Das Ansteuern der Auslenkungseinrichtung 13 anhand der Hilfsgröße G(p_{gem}; T_{gem}) bietet den Vorteil, dass der Druckmessaufnehmer in dem gesamten Temperaturbereich eines baugleichen Druckmessaufnehmer ohne Auslenkungseinrichtung in dem oben beschriebenen vergrößerten Druckmessbereich eingesetzt werden kann, und die Messbereichsobergrenze des Druckmessbereichs nur in dem oberhalb dieses Temperaturbereich liegenden Teilbereich des vergrößerten Temperaturmessbereichs auf einen begrenzt Wert werden muss, der um den Betrag des durch die Kraft K bzw. die größte Kraft K bewirkten Druckanstiegs Δp(K) unterhalb der Messbereichsobergrenze des baugleichen Druckmessaufnehmers ohne Auslenkeinrichtung liegt.

Unabhängig davon, ob die Steuerung 11 die Auslenkeinrichtung 13 anhand des gemessenen Drucks p_{gem} und/oder der gemessenen Temperatur T_{gem} ansteuert, ist der Druckmessaufnehmer vorzugsweise derart ausgebildet, dass er im Messbetrieb ein Druckmessergebnis PM ausgibt, dass bei ausgeschalter Auslenkeinrichtung 13 dem mittels des Drucksensors 1 gemessenen Druck p_{gem} entspricht, und dass bei eingeschalter Auslenkeinrichtung 13 einer Differenz zwischen dem mittels des Drucksensors 1 gemessenen Druck p_{gem} und dem durch die Kraft K bewirkten Druckanstieg Δp(K) des gemessenen Drucks p_{gem} entspricht. Dieses Druckmessergebnis PM kann z.B. mittels einer im Druckmessaufnehmer integrierten Messeinrichtung 45 bestimmt und in Form eines dem Druckmessergebnis PM entsprechenden Druckmesswerts angezeigt und/oder in Form eines dem Druckmessergebnis PM entsprechenden Ausgangssignals ausgegeben werden.

Optional können den Elektromagnet 17 umfassende erfindungsgemäße Druckmessaufnehmer zusätzlich eine an den Elektromagnet 17 anschließbare oder angeschlossene Auslenkungsmessschaltung 47 umfassen, die derart ausgebildet ist, dass sie die von dem auf die Trennmembran 5 einwirkenden Druck p abhängige Auslenkung der Trennmembran 5 bei ausgeschalteter Auslenkeinrichtung 13 anhand einer von der Auslenkung der Trennmembran 5 abhängigen Eigenschaft des Elektromagneten 17, wie z.B. dessen Induktivität L oder einer von dessen Induktivität L abhängigen Größe, bestimmt. Fig.1 zeigt hierzu ein Ausführungsbeispiel, bei dem die Spule 29 über die elektronisch steuerbare Schalteinrichtung 41 bei eingeschalteter Auslenkeinrichtung 13 an die Gleichstromquelle I_{DC} und bei ausgeschalteter Auslenkeinrichtung 13 an die Auslenkungsmessschaltung 47 angeschlossen ist.

Bei dieser Ausführungsform umfasst der Druckmessaufnehmer vorzugsweise eine Prüfeinrichtung 49, die derart ausgebildet ist, dass sie die Funktionsfähigkeit und/oder die Messgenauigkeit des Druckmessaufnehmer bei ausgeschalteter Auslenkeinrichtung 13 anhand des mittels des Drucksensors 1 gemessenen Drucks p_{gem} und der parallel hierzu mittels der Auslenkungsmessschaltung 47 ermittelten Auslenkung der Trennmembran 5 überprüft. Die Prüfeinrichtung 49 kann als separate an die Auslenkungsmessschaltung 47 und den Drucksensor 1 bzw. die Druckmessschaltung 37 angeschlossene Prüfeinrichtung 49 ausgebildet sein oder an anderer Stelle im Druckmessaufnehmer integriert sein. Alternativ oder zusätzlich hierzu ist die Prüfeinrichtung 49 vorzugsweise derart ausgebildet, dass sie ein Prüfungsergebnis PG der Überprüfung ausgibt und/oder eine Warnung oder einen Alarm auslöst, wenn die gemessene Auslenkung und der gemessene Druck p_{gem} oder deren Änderungsraten um mehr als eine vorgegebene Toleranz voneinander abweichen.

## Patentansprüche

1. Druckmessaufnehmer, mit
einem Drucksensor (1),
einem dem Drucksensor (1) vorgeschalteten Druckmittler (3), der eine Trennmembran (5) umfasst, deren Außenseite mit einem Druck (p) beaufschlagbar ist und unter der eine Druckempfangskammer (7) eingeschlossen ist, und
einem an die Druckempfangskammer (7) angeschlossenen, mit einer Druck übertragenden Flüssigkeit gefüllten, hydraulischen Druckübertragungspfad (9), der den auf die Außenseite der Trennmembran (5) einwirkenden Druck (p) auf den Drucksensor (1) überträgt,
wobei der Druckmittler (3) eine mittels einer an den Drucksensor (1) und/oder an einen Temperatursensor (TS1, TS2, TS3) angeschlossenen Steuerung (11) ansteuerbare Auslenkeinrichtung (13) umfasst, die dazu ausgestaltet ist zu durch die Steuerung (11) anhand eines fortlaufend mittels des Drucksensor (1) gemessenen Drucks (p_{gem}) und/oder einer fortlaufend mittels des Temperatursensors (TS1, TS2, TS3) gemessenen Temperatur (T_{gem}) bestimmten Zeiten eine die Trennmembran (5) in Richtung deren Membranbett (15) auslenkende Kraft (K) auf die Trennmembran (5) oder ein mit der Trennmembran (5) verbundenes Element auszuüben, wobei die Trennmembran (5) magnetisch oder ferromagnetisch ist oder mit einem magnetischen oder ferromagnetischen Element verbunden ist, und
die Auslenkeinrichtung (13) einen Elektromagnet (17) umfasst, der dazu ausgebildet ist zu durch die Steuerung (11) vorgegebenen Zeiten die die Trennmembran (5) in Richtung deren Membranbett (15) auslenkende Kraft (K) auf die magnetische oder ferromagnetische Trennmembran (5) oder das mit der Trennmembran (5) verbundene magnetische oder ferromagnetische Element auszuüben, wobei der Elektromagnet (17) im Druckmittler (3) integriert ist,
eine Spule (29) des Elektromagneten (17) derart ausgerichtet ist, dass eine Verlängerung von deren Längsachse parallel zur Flächennormale auf die Trennmembran (5) durch die Mitte der Trennmembran (5) hindurch verläuft,
die Spule (29) derart angeordnet ist, dass sie einen Abschnitt des von der Druckempfangskammer (7) zum Drucksensor (1) verlaufenden Druckübertragungspfads (9) außenseitlich allseitig umgibt, und/oder
der Elektromagnet (17) einen zumindest abschnittweise von der Spule (29) umgebenen hohlzylindrischen Kern (31) umfasst, durch den ein in der Druckempfangskammer (9) mündender Endbereich des hydraulischen Druckübertragungspfad (9) hindurch verläuft, **dadurch gekennzeichnet, dass** der Druckmessaufnehmer
eine an den Elektromagnet (17) anschließbare oder angeschlossene Auslenkungsmessschaltung (47) umfasst, die derart ausgebildet ist, dass sie eine von dem auf die Trennmembran (5) einwirkenden Druck (p) abhängige Auslenkung der Trennmembran (5) bei ausgeschalteter Auslenkeinrichtung (13) anhand einer von der Auslenkung der Trennmembran (5) abhängigen Eigenschaft des Elektromagneten (17), einer Induktivität (L) des Elektromagneten (17) oder einer von der Induktivität (L) des Elektromagneten (17) abhängigen Größe bestimmt, und
eine Prüfeinrichtung (49) umfasst, die derart ausgebildet ist, dass sie die Funktionsfähigkeit und/oder die Messgenauigkeit des Druckmessaufnehmer bei ausgeschalteter Auslenkeinrichtung (13) anhand des mittels des Drucksensors (1) gemessenen Drucks (p_{gem}) und der parallel hierzu mittels der Auslenkungsmessschaltung (47) ermittelten Auslenkung der Trennmembran (5) überprüft.

2. Druckmessaufnehmer gemäß Anspruch 1, **dadurch gekennzeichnet, dass** die Trennmembran (5) aus einem Edelstahl oder einem austenitischen Edelstahl besteht, oder die Trennmembran (5) zumindest abschnittweise oder insgesamt aus einem magnetischen Material, aus einem ferromagnetischen Material, aus einem ferromagnetischen Stahl, aus einem ferritischen Stahl, aus einem Duplex-Stahl oder aus einem Superduplex-Stahl besteht.

3. Druckmessaufnehmer gemäß Anspruch 1 bis 2, **dadurch gekennzeichnet, dass** das mit der Trennmembran (5) verbundene magnetische oder ferromagnetische Element eine auf einer in die Druckempfangskammer (7) hinein weisenden Innenseite der Trennmembran (5) angeordnete Scheibe (19) umfasst, wobei die Scheibe (19)
a) aus einem magnetischen oder ferromagnetischen Material, aus einer magnetischen oder ferromagnetischen Legierung, aus einem ferromagnetischen Stahl, aus einem ferritischen Stahl, aus einem Duplex-Stahl, aus einem Superduplex-Stahl, aus Eisen, aus Gusseisen, aus einer magnetischen oder ferromagnetischen Keramik, aus einer ferritischen Keramik oder aus einem Eisenoxid besteht,
b) als Beschichtung oder als galvanische Beschichtung auf die Trennmembran (5) aufgebracht oder durch eine Fügung oder eine Lötung mit der Trennmembran (5) verbunden ist,
c) bei einer Materialstärke der Trennmembran (5) von 25 µm bis 200 µm eine Scheibendicke von 0,1 µm bis 500 µm aufweist, bei einer Materialstärke der Trennmembran (5) von 25 µm bis 100 µm eine Scheibendicke von 0,1 µm bis 300 µm aufweist oder bei einer Materialstärke der Trennmembran (5) von 50 µm bis 200 µm eine Scheibendicke von 10 µm bis 500 µm aufweist, und/oder
d) einen Durchmesser aufweist, der geringer als ein Durchmesser der Trennmembran (5) ist und/oder bei einem Durchmesser der Trennmembran (5) von 20 mm bis 90 mm einen Durchmesser von 2 mm bis 15 mm aufweist, wobei die Scheibe (19) konzentrisch zur Trennmembran (5) angeordnet ist.

4. Druckmessaufnehmer gemäß Anspruch 1 bis 2, **dadurch gekennzeichnet, dass** das mit der Trennmembran (5) verbundene Element einen auf einer in die Druckempfangskammer (7) hinein weisenden Innenseite der Trennmembran (5) montierten Permanentmagnet (21) umfasst.

5. Druckmessaufnehmer gemäß Anspruch 4, **dadurch gekennzeichnet, dass** sich der Permanentmagnet (21) in einen an die Druckempfangskammer (7) angrenzenden Endbereich des Druckübertragungspfades (9) hinein erstreckt, der außenseitlich zumindest abschnittweise von einer Spule (29) des Elektromagneten (17) umgeben ist.

6. Druckmessaufnehmer gemäß Anspruch 1 bis 5, **dadurch gekennzeichnet, dass** der Elektromagnet (17) derart ausgerichtet ist, dass die damit auf die Trennmembran (5) oder das auf der Innenseite der Trennmembran (5) mit einem die Trennmembranmitte umfassenden zentralen Bereich der Trennmembran (5) verbundene Element ausübbare magnetische Anziehungskraft in einer parallel zur Flächennormale auf die Trennmembran (5) durch eine Mitte der Trennmembran (5) hindurch verlaufenden Richtung maximal ist.

7. Druckmessaufnehmer gemäß Anspruch 1 bis 6, **dadurch gekennzeichnet, dass** die Steuerung (11) und die Auslenkeinrichtung (13) derart ausgebildet sind, dass die Auslenkeinrichtung (13) mittels der Steuerung (11) einschaltbar und ausschaltbar ist und/oder die Auslenkeinrichtung (13) im eingeschalteten Zustand entweder eine konstante Kraft (K) vorgegebener Größe oder eine Kraft (K) einer mittels der Steuerung (11) vorgegebenen Größe auf die Trennmembran (5) ausübt.

8. Druckmessaufnehmer gemäß Anspruch 1 bis 7, **dadurch gekennzeichnet,**
**dass**
a) die Steuerung (11) derart ausgebildet ist, dass sie die Auslenkeinrichtung (13) in Abhängigkeit von dem mittels des Drucksensors (1) gemessenen Druck (p_{gem}) einschaltet, wenn der bei ausgeschalteter Auslenkeinrichtung (13) mittels des Drucksensors (1) gemessene Druck (p_{gem}) eine vorgegebene Untergrenze (pₘᵢₙ) unterschreitet und die Auslenkeinrichtung (13) ausschaltet, wenn der bei eingeschalteter Auslenkeinrichtung (13) mittels des Drucksensors (1) gemessene Druck (p_{gem}) eine vorgegebene Obergrenze (pₘₐₓ) überschreitet,
b) die Steuerung (11) derart ausgebildet ist, dass sie die Auslenkeinrichtung (13) einschaltet, wenn die bei ausgeschalteter Auslenkeinrichtung (13) mittels des Temperatursensors (TS1, TS2, TS3) gemessene Temperatur (T_{gem}) eine vorgegebene Temperaturobergrenze (Tₘₐₓ) überschreitet, und die Auslenkeinrichtung (13) ausschaltet, wenn die bei eingeschalteter Auslenkeinrichtung (13) mittels des Temperatursensors (TS1, TS2, TS3) gemessene Temperatur (T_{gem}) eine vorgegebene Temperaturuntergrenze (Tₘᵢₙ) unterschreitet, oder
c) die Steuerung (11) derart ausgebildet ist, dass sie
c1) anhand des gemessenen Drucks (p_{gem}) und der gemessenen Temperatur (T_{gem}) eine Hilfsgröße (G(p_{gem}; T_{gem})) bestimmt, indem sie von dem gemessenen Druck (p_{gem}) einen von der gemessenen Temperatur (T_{gem}) abhängigen, mit steigender Temperatur ansteigenden Wert (W(T_{gem})) abzieht,
c2) die Auslenkeinrichtung (13) einschaltet, wenn die bei ausgeschalteter Auslenkeinrichtung (13) bestimmte Hilfsgröße (G(p_{gem}; T_{gem})) eine vorgegebene Hilfsgrößenuntergrenze (Gₘᵢₙ) unterschreitet, und
c3) die Auslenkeinrichtung (13) ausschaltet, wenn die bei eingeschalteter Auslenkeinrichtung (13) bestimmte Hilfsgröße (G(p_{gem}; T_{gem})) eine vorgegebene Hilfsgrößenobergrenze (Gₘₐₓ) überschreitet.

9. Druckmessaufnehmer gemäß Anspruch 8, **dadurch gekennzeichnet, dass**
a) die Obergrenze (pₘₐₓ) echt größer als die Summe aus der Untergrenze (pₘᵢₙ) und einem durch die Kraft (K) bewirkten Druckanstieg (Δp(K)) des gemessenen Drucks (p_{gem}) ist,
b) die Temperaturobergrenze (Tₘₐₓ) echt größer als die Temperaturuntergrenze (Tₘᵢₙ) ist, oder
c) die Hilfsgrößenobergrenze (Gₘₐₓ) echt größer als die Summe aus der Hilfsgrößenuntergrenze (Gₘᵢₙ) und einem durch die Kraft (K) bewirkten Druckanstieg (Δp(K)) des gemessenen Drucks (p_{gem}) ist.

10. Druckmessaufnehmer gemäß Anspruch 1 bis 9, **dadurch gekennzeichnet, dass** die Steuerung (11) derart ausgebildet ist, dass sie die Größe der von der Auslenkeinrichtung (13) ausgeübten Kraft (K) anhand des gemessenen Drucks (p_{gem}) und/oder der gemessenen Temperatur (T_{gem}), sowie der Größe der zuvor auf Trennmembran (5) oder das damit verbundene Element ausgeübten Kraft (K) stufenweise oder kontinuierlich anpasst.

11. Druckmessaufnehmer gemäß Anspruch 1 bis 9, **dadurch gekennzeichnet,**
**dass** der Druckmessaufnehmer derart ausgebildet ist, dass er ein Druckmessergebnis (PM) ausgibt, das bei ausgeschalteter Auslenkeinrichtung (13) dem mittels des Drucksensors (1) gemessenen Druck (p_{gem}) entspricht, und das bei eingeschalteter Auslenkeinrichtung (13) einer Differenz zwischen dem mittels des Drucksensors (1) gemessenen Druck (p_{gem}) und einem durch die Kraft (K) bewirkten Druckanstieg Δp(K) des gemessenen Drucks (p_{gem}) entspricht.

## Claims

1. A pressure transducer, with
a pressure sensor (1),
a diaphragm seal (3) upstream of the pressure sensor (1), which comprises a separating membrane (5), the outer side of which can have a pressure (p) applied to it and which is encapsulated beneath a pressure-receiving chamber (7), and
a hydraulic pressure-transmitting path (9) connected to the pressure-receiving chamber (7) and filled with a pressure-transmitting fluid, said path transmitting the pressure (p) acting on the outer side of the separating membrane (5) to the pressure sensor (1),
wherein the diaphragm seal (3) comprises a deflection device (13) which can be activated by a controller (11) connected to the pressure sensor (1) and/or to a temperature sensor (TS1, TS2, TS3), said deflection device being configured to exert a force (K) diverting the separating membrane (5) toward its membrane bed (15) on the separating membrane (5) or an element connected to the separating membrane (5) at times determined by the controller (11) based on a pressure (pgem) continuously measured by the pressure sensor (1) and/or a temperature (T9em) continuously measured by the temperature sensor (TS1, TS2, TS3), wherein the separating membrane (5) is magnetic or ferromagnetic, or connected to a magnetic or ferromagnetic element, and
the deflection device (13) comprises an electromagnet (17) which is configured to exert the force (K) diverting the separating membrane (5) toward its membrane bed (15) on the magnetic or ferromagnetic separating membrane (5) or the magnetic or ferromagnetic element connected to the separating membrane (5) at times prespecified by the controller (11), wherein the electromagnet (17) is integrated into the diaphragm seal (3),
a coil (29) of the electromagnet (17) is aligned in such a way that an extension from its longitudinal axis parallel to the surface normal on the separating membrane (5) runs through the center of the separating membrane (5),
the coil (29) is arranged in such a way that it surrounds a section of the pressure-transmitting path (9) extending from the pressure-receiving chamber (7) to the pressure sensor (1) on all outer sides, and/or
the electromagnet (17) comprises a hollow cylindrical core (31) which is surrounded at least in part by the coil (29), through which core an end area of the hydraulic pressure-transmitting path (9) opening into the pressure-receiving chamber (7) extends, **characterized in that** pressure transducer comprises a deflection-measuring circuit (47) which can be connected or is connected to the electromagnet (17), said circuit being configured in such a way that it determines a deflection of the separating membrane (5) depending on the pressure (p) acting on the separating membrane (5) when the deflection device (13) is switched off based on a property of the electromagnet (17) depending on the deflection of the separating membrane (5), an inductance (L) of the electromagnet (17), or a variable depending on the inductance (L) of the electromagnet (17), and
comprises a test device (49) which is configured in such a way that it tests the functionality and/or the measurement accuracy of the pressure transducer when the deflection device (13) is switched off based on the pressure (pgem) measured by the pressure sensor (1) and the deflection of the separating membrane (5) which is determined in parallel with this by the deflection-measuring circuit (47).

2. The pressure transducer as claimed in claim 1, **characterized in that** the separating membrane (5) is made of a stainless steel or an austenitic stainless steel, or the separating membrane (5) is made in full or at least in part of a magnetic material, a ferromagnetic material, a ferromagnetic steel, a ferritic steel, a duplex steel or a super duplex steel.

3. The pressure transducer as claimed in claims 1 to 2, **characterized in that** the magnetic or ferromagnetic element connected to the separating membrane (5) comprises a disk (19) arranged on an inner side of the separating membrane (5) facing into the pressure-receiving chamber (7), wherein the disk (19)
a) is made of a magnetic or ferromagnetic material, a magnetic or ferromagnetic alloy, a ferromagnetic steel, a ferritic steel, a duplex steel, a super duplex steel, iron, cast iron, a magnetic or ferromagnetic ceramic, a ferritic ceramic, or an iron oxide,
b) is applied to the separating membrane (5) as a coating or a galvanic coating or is connected to the separating membrane (5) through joining or soldering,
c) has a disk thickness from 0.1 µm to 500 µm when the separating membrane (5) has a material thickness from 25 µm to 200 µm, has a disk thickness from 0.1 µm to 300 µm when the separating membrane (5) has a material thickness from 25 µm to 100 µm, or has a disk thickness from 10 µm to 500 when the separating membrane (5) has a material thickness from 50 µm to 200 µm, and/or
d) has a diameter which is smaller than a diameter of the separating membrane (5) and/or has a diameter from 2 mm to 15 mm if the separating membrane (5) has a diameter of 20 mm to 90 mm, wherein the disk (19) is arranged concentrically relative to the separating membrane (5).

4. The pressure transducer as claimed in claims 1 to 2, **characterized in that** the element connected to the separating membrane (5) comprises a permanent magnet (21) mounted on the inner side of the separating membrane (5) facing into the pressure-receiving chamber (7).

5. The pressure transducer as claimed in claim 4, **characterized in that** the permanent magnet (21) extends into an end area of the pressure-transmitting path (9) adjacent to the pressure-receiving chamber (7), said path being surrounded on the outer side at least in part by a coil (29) of the electromagnet (17).

6. The pressure transducer as claimed in claims 1 to 5, **characterized in that** the electromagnet (17) is aligned in such a way that the magnetic attraction force which can be exerted using said magnet on the separating membrane (5) or on the inner side of the separating membrane (5) with an element connected to a central area of the separating membrane (5) comprising the center of the separating membrane is at its maximum in a direction which runs parallel to the surface normal, onto the separating membrane (5) and through a center of the separating membrane (5).

7. The pressure transducer as claimed in claims 1 to 6, **characterized in that** the controller (11) and the deflection device (13) are configured in such a way that the deflection device (13) can be switched on and off using the controller (11) and/or the deflection device (13), when switched on, either exerts on the separating membrane (5) a constant force (K) of a prespecified variable or a force (K) of a variable specified by the controller (11).

8. The pressure transducer as claimed in claims 1 to 7, **characterized in that**
a) the controller (11) is configured in such a way that it switches on the deflection device (13) depending on the pressure (pgem) measured by the pressure sensor (1) if the pressure (pgem) measured by the pressure sensor (1) when the deflection device (13) is switched off drops below a prespecified lower limit (Pmin), and switches off the deflection device (13) if the pressure (pgem) measured by the pressure sensor (1) when the deflection device (13) is switched on exceeds a prespecified upper limit (Pmax),
b) the controller (11) is configured in such a way that it switches on the deflection device (13) if the temperature (Tgem) measured by the temperature sensor (TS1, TS2, TS3) when the deflection device (13) is switched off exceeds a prespecified upper temperature limit (Tmax), and switches off the deflection device (13) if the temperature (Tgem) measured by the temperature sensor (TS1, TS2, TS3) when the deflection device (13) is switched on drops below a prespecified lower temperature limit (Tmin), or
c) the controller (11) is configured in such a way that it
c1) determines an auxiliary variable (G(pgem; Tgem)) based on the measured pressure (pgem) and the measured temperature (Tgem) by subtracting from the measured pressure (pgem) a value (W(Tgem)) which depends on the measured temperature (Tgem) and increases as the temperature rises,
c2) switches on the deflection device (13) if the auxiliary variable (G(pgem; Tgem)) determined when the deflection device (13) is switched off drops below a prespecified lower auxiliary variable limit (Gmin), and
c3) switches off the deflection device (13) if the auxiliary variable (G(pgem; Tgem)) determined when the deflection device (13) is switched on exceeds a prespecified upper auxiliary variable limit (Gmax).

9. The pressure transducer as claimed in claim 8, **characterized in that**
a) the upper limit (Pmax) is higher than the total of the lower limit (Pmin) and a pressure increase (b.p(K)) of the measured pressure (pgem) effected by the force (K),
b) the upper temperature limit (Tmax) is higher than the lower temperature limit (Tmin), or
c) the upper auxiliary variable limit (Gmax) is higher than the total of the lower auxiliary variable limit (Gmin) and a pressure increase (b.p(K)) of the measured pressure (pgem) effected by the force (K).

10. The pressure transducer as claimed in claims 1 to 9, **characterized in that** the controller (11) is configured in such a way that it gradually or continuously adapts the variable of the force (K) exerted by the deflection device (13) based on the measured pressure (pgem) and/or the measured temperature (Tgem), as well as the variable of the force (K) previously exerted on the separating membrane (5) or the element connected thereto.

11. The pressure transducer as claimed in claims 1 to 9, **characterized in that** the pressure transducer is configured in such a way that it issues a pressure measurement (PM) which corresponds to the pressure (pgem) measured by the pressure sensor (1) when the deflection device (13) is switched off, and which corresponds to a difference between the pressure (pgem) measured by the pressure sensor (1) and a pressure increase Δp(K) of the measured pressure (pgem) effected by the force (K) when the deflection device (13) is switched on.

## Revendications

1. Transmetteur de pression, comprenant
un capteur de pression (1),
un séparateur (3) placé en amont du capteur de pression (1), lequel séparateur comprend une membrane de séparation (5) dont la face extérieure peut être soumise à une pression (p) et sous laquelle est enfermée une chambre de réception de pression (7), et
un chemin de transmission de pression hydraulique (7) raccordé à la chambre de réception de pression (7), laquelle chambre est remplie d'un liquide transmettant la pression, lequel chemin transmet la pression (p) agissant sur la face extérieure de la membrane de séparation (5) au capteur de pression (1),
le séparateur (3) comprenant un dispositif de déviation (13) pouvant être commandé au moyen d'une commande (11) raccordée au capteur de pression (1) et/ou à un capteur de température (TS1, TS2, TS3), lequel dispositif est conçu pour exercer - à des moments définis par la commande (11) sur la base d'une pression (p_{gem}) mesurée en continu au moyen du capteur de pression (1) et/ou d'une température (T_{gem}) mesurée en continu au moyen du capteur de température (TS1, TS2, TS3) - une force (K), déviant la membrane de séparation (5) en direction de son lit de membrane (15), sur la membrane de séparation (5) ou sur un élément relié à la membrane de séparation (5), la membrane de séparation (5) étant magnétique ou ferromagnétique ou étant reliée à un élément magnétique ou ferromagnétique, et
le dispositif de déviation (13) comprenant un électroaimant (17), lequel est conçu pour exercer, à des moments prédéfinis par la commande (11), la force (K), déviant la membrane de séparation (5) en direction de son lit de membrane (15), sur la membrane de séparation (5) magnétique ou ferromagnétique ou sur l'élément magnétique ou ferromagnétique relié à la membrane de séparation (5), l'électroaimant (17) étant intégré dans le séparateur (3),
une bobine (29) de l'électroaimant (17) étant orientée de telle sorte qu'un prolongement de son axe longitudinal s'étend parallèlement à la normale à la surface sur la membrane de séparation (5) en passant par le centre de la membrane de séparation (5),
la bobine (29) étant disposée de telle sorte qu'elle entoure de tous côtés, à l'extérieur, une section du chemin de transmission de pression (9) s'étendant de la chambre de réception de pression (7) au capteur de pression (1), et/ou
l'électroaimant (17) comprenant un noyau cylindrique creux (31) entouré au moins par sections par la bobine (29), noyau à travers lequel s'étend une zone d'extrémité du chemin de transmission de pression hydraulique (9) débouchant dans la chambre de réception de pression (9),
**caractérisé en ce que** le transmetteur de pression comprend
un circuit de mesure de déviation (47) raccordable ou raccordé à l'électroaimant (17), lequel circuit est conçu de telle sorte à détecter une déviation de la membrane de séparation (5) dépendant de la pression (p) agissant sur la membrane de séparation (5) lorsque le dispositif de déviation (13) est désactivé, à l'aide d'une propriété de l'électroaimant (17) dépendant de la déviation de la membrane de séparation (5), d'une inductance (L) de l'électroaimant (17) ou d'une grandeur dépendant de l'inductance (L) de l'électroaimant (17), et
un dispositif de contrôle (49), lequel est conçu de telle sorte à contrôler l'aptitude au fonctionnement et/ou la précision de mesure du transmetteur de pression lorsque le dispositif de déviation (13) est désactivé, à l'aide de la pression (p_{gem}) mesurée au moyen du capteur de pression (1) et de la déviation de la membrane de séparation (5) déterminée parallèlement à cela au moyen du circuit de mesure de déviation (47).

2. Transmetteur de pression selon la revendication 1, **caractérisé en ce que** la membrane de séparation (5) est constituée d'un acier inoxydable ou d'un acier inoxydable austénitique, ou **en ce que** la membrane de séparation (5) est constituée au moins en partie ou en totalité d'un matériau magnétique, d'un matériau ferromagnétique, d'un acier ferromagnétique, d'un acier ferritique, d'un acier duplex ou d'un acier superduplex.

3. Transmetteur de pression selon les revendications 1 à 2, **caractérisé en ce que** l'élément magnétique ou ferromagnétique relié à la membrane de séparation (5) comprend un disque (19) disposé sur une face interne de la membrane de séparation (5) orientée vers l'intérieur de la chambre de réception de pression (7), ledit disque (19)
a) étant constitué d'un matériau magnétique ou ferromagnétique, d'un alliage magnétique ou ferromagnétique, d'un acier ferromagnétique, d'un acier ferritique, d'un acier duplex, d'un acier superduplex, de fer, de fonte, d'une céramique magnétique ou ferromagnétique, d'une céramique ferritique ou d'un oxyde de fer,
b) étant appliqué sur la membrane de séparation (5) sous forme de revêtement ou de revêtement galvanique ou étant relié à la membrane de séparation (5) par un assemblage ou une soudure,
c) présentant, pour une épaisseur de matériau de la membrane de séparation (5) de 25 µm à 200 µm, une épaisseur de disque de 0,1 µm à 500 µm, pour une épaisseur de matériau de la membrane de séparation (5) de 25 µm à 100 µm, une épaisseur de disque de 0,1 µm à 300 µm ou pour une épaisseur de matériau de la membrane de séparation (5) de 50 µm à 200 µm, une épaisseur de disque de 10 µm à 500 µm, et/ou
d) présentant un diamètre qui est inférieur à un diamètre de la membrane de séparation (5) et/ou présentant un diamètre de 2 mm à 15 mm pour un diamètre de la membrane de séparation (5) de 20 mm à 90 mm, le disque (19) étant disposé de manière concentrique à la membrane de séparation (5).

4. Transmetteur de pression selon les revendications 1 à 2, **caractérisé en ce que** l'élément relié à la membrane de séparation (5) comprend un aimant permanent (21) monté sur une face interne de la membrane de séparation (5) tournée vers l'intérieur de la chambre de réception de pression (7).

5. Transmetteur de pression selon la revendication 4, **caractérisé en ce que** l'aimant permanent (21) s'étend dans une zone d'extrémité du chemin de transmission de pression (9), laquelle zone est adjacente à la chambre de réception de pression (7) et laquelle zone est entourée du côté extérieur au moins par sections par une bobine (29) de l'électroaimant (17).

6. Transmetteur de pression selon les revendications 1 à 5, **caractérisé en ce que** l'électroaimant (17) est orienté de telle sorte que la force d'attraction magnétique
- qu'il peut exercer sur la membrane de séparation (5) ou sur l'élément relié sur la face interne de la membrane de séparation (5) à une zone centrale de la membrane de séparation (5) comprenant le centre de la membrane de séparation
- est maximale dans une direction parallèle à la normale à la surface sur la membrane de séparation (5) passant par un centre de la membrane de séparation (5).

7. Transmetteur de pression selon les revendications 1 à 6, **caractérisé en ce que** la commande (11) et le dispositif de déviation (13) sont conçus de telle sorte que le dispositif de déviation (13) peut être activé et désactivé au moyen de la commande (11) et/ou le dispositif de déviation (13) exerce, à l'état activé, soit une force constante (K) de grandeur prédéfinie, soit une force (K) d'une grandeur prédéfinie au moyen de la commande (11) sur la membrane de séparation (5).

8. Transmetteur de pression selon les revendications 1 à 7, **caractérisé en ce que**
a) la commande (11) est conçue de telle sorte qu'elle active le dispositif de déviation (13) en fonction de la pression (p_{gem}) mesurée au moyen du capteur de pression (1), lorsque la pression (p_{gem}) mesurée au moyen du capteur de pression (1) lorsque le dispositif de déviation (13) est désactivé est inférieure à une limite inférieure (pₘᵢₙ) prédéfinie et désactivé le dispositif de déviation (13) lorsque la pression (p_{gem}) mesurée au moyen du capteur de pression (1) lorsque le dispositif de déviation (13) est activé est supérieure à une limite supérieure (pₘₐₓ) prédéfinie,
b) la commande (11) est conçue de telle sorte qu'elle active le dispositif de déviation (13) lorsque la température (_{Tgem}) mesurée au moyen du capteur de température (TS1, TS2, TS3) lorsque le dispositif de déviation (13) est désactivé dépasse une limite supérieure de température (Tₘₐₓ) prédéfinie, et désactive le dispositif de déviation (13) lorsque la température (T_{gem}) mesurée au moyen du capteur de température (TS1, TS2, TS3) lorsque le dispositif de déviation (13) est activé passe en dessous d'une limite inférieure de température (Tₘᵢₙ) prédéfinie, ou
c) la commande (11) est conçue de telle sorte que
c1) à l'aide de la pression mesurée (p_{gem}) et de la température mesurée (T_{gem}), elle détermine une grandeur auxiliaire (G(p_{gem} ; T_{gem})) en soustrayant de la pression mesurée (p_{gem}) une valeur (W(T_{gem})) qui dépend de la température mesurée (T_{gem}) et qui augmente avec la température,
c2) elle active le dispositif de déviation (13) lorsque la grandeur auxiliaire (G(p_{gem} ; T_{gem})) est inférieure à une limite inférieure de grandeur auxiliaire (Gₘᵢₙ) prédéfinie, et
c3) le dispositif de déviation (13) est désactivé lorsque la grandeur auxiliaire (G(p_{gem} ; T_{gem})) déterminée lorsque le dispositif de déviation (13) est activé dépasse une limite supérieure de grandeur auxiliaire (Gₘₐₓ) prédéfinie.

9. Transmetteur de pression selon la revendication 8, **caractérisé en ce que**
a) la limite supérieure (pₘₐₓ) est réellement supérieure à la somme de la limite inférieure (pₘᵢₙ) et d'une augmentation de pression (Δp(K)) de la pression mesurée (p_{gem}) provoquée par la force (K),
b) la limite supérieure de température (Tₘₐₓ) est réellement supérieure à la limite inférieure de température (Tₘᵢₙ) ; ou
c) la limite supérieure de grandeur auxiliaire (Gₘₐₓ) est réellement supérieure à la somme de la limite inférieure de grandeur auxiliaire (Gₘᵢₙ) et d'une augmentation de pression (Δp(K)) de la pression mesurée (p_{gem}) provoquée par la force (K).

10. Transmetteur de pression selon les revendications 1 à 9, **caractérisé en ce que** la commande (11) est conçue de telle sorte qu'elle adapte, par étapes ou en continu, la grandeur de la force (K) exercée par le dispositif de déviation (13) à l'aide de la pression mesurée (p_{gem}) et/ou de la température mesurée (T_{gem}), ainsi que de la grandeur de la force (K) exercée auparavant sur la membrane de séparation (5) ou l'élément qui lui est relié.

11. Transmetteur de pression selon les revendications 1 à 9, **caractérisé en ce que** le transmetteur de pression est conçu de telle sorte qu'il délivre un résultat de mesure de pression (PM) qui, lorsque le dispositif de déviation (13) est désactivé, correspond à la pression (p_{gem}) mesurée au moyen du capteur de pression (1), et qui, lorsque le dispositif de déviation (13) est activé, correspond à une différence entre la pression (p_{gem}) mesurée au moyen du capteur de pression (1) et une augmentation de pression Δp(K) de la pression mesurée (p_{gem}) provoquée par la force (K).
